# EUROPÄISCHE PATENTSCHRIFT

(11) **EP 1 760 808 B1**
(45) Veröffentlichungstag und Bekanntmachung des Hinweises auf die Patenterteilung: **23.07.2008**
(21) Anmeldenummer: 05019291.3
(22) Anmeldetag: 06.09.2005
(51) Int. Cl.: H01M 4/86, H01M 4/96, H01M 8/10

(54) **Elektroden für Brennstoffzellen**
Electrodes for a fuel cell
Electrodes pour une pile à combustible

(43) Veröffentlichungstag der Anmeldung: 07.03.2007
(73) Patentinhaber: SGL Carbon AG, 65203 Wiesbaden (DE)
(72) Erfinder: Mändle, Michael, 86672 Thierhaupten (DE); Kauranen, Pertti, Dr., 33820 Tampere (FI); Berg, Norbert, Dr., 64295 Darmstadt (DE)

(56) Entgegenhaltungen:
- EP-A- 1 333 513
- WO-A-01/54213
- WO-A-02/29836
- WO-A-97/08766
- WO-A-97/23010
- US-A- 3 770 509
- US-A- 4 461 812

## Beschreibung

Die Erfindung betrifft Elektroden für Brennstoffzellen mit mehrlagiger Fluidverteilerstruktur.

Aus der Patentschrift US 5,252,410 ist ein Konzept für Brennstoffzellen bekannt, das sich dadurch auszeichnet, dass sich die Strömungswege zur flächigen Verteilung der Reaktanden nicht wie herkömmlich in den den Elektroden zugewandten Oberflächen des Separators befinden, sondern in den Elektroden selbst. Dieses Konzept hat gegenüber dem Stand der Technik mit strukturierten Separatoroberflächen mehrere Vorteile.
So können Separatoren, die keine Fluidverteilerstruktur aufnehmen müssen, dünner ausgelegt werden, so dass der Platzbedarf des Brennstoffzellenstapels sinkt. Wegen ihrer Funktion der Trennung der Reaktanden bestehen die Separatoren aus dichtem und damit schwerem Material, eine Reduzierung ihrer Dicke würde auch das Gewicht des Brennstoffzellenstapels signifikant vermindern.
Ein weiterer Vorteil besteht darin, dass durch Verlegung der Fluidverteiletruktur in die Elektroden die Reaktanden näher an die katalysatorbeschichteten Blektrode/Elektrolytmembran-Grenzflächen gelangen, an welchen die elektrochemischen Reaktionen ablaufen.
Außerdem ist die Formgebung bei den leichten, porösen Materialien der Elektroden im allgemeinen weniger schwierig als bei den dichten und starren Materialien der Separatoren.

Eine Brennstoffzelle gemäß US 5,252,410 umfasst im einzelnen
- zwei elektrisch leitende, für Fluide undurchlässige Separatorschichten
- einen zwischen den beiden Separatorschichten eingebetteten Membran-Elektroden-Verbund aus zwei porösen Elektrodenschichten, zwischen denen sich eine protonenleitende Membran befindet, mit Katalysatorschichten an den Grenzflächen zwischen Elektroden und Membran, wobei
   - die erste Elektrode einen Einlass und einen Auslass für einen Brennstoff aufweist sowie Mittel zum Transport des Brennstoffs innerhalb der Elektrode vom Einlass zum Auslass und
   - die zweite Elektrode einen Einlass und einen Auslass für ein Oxidationsmittel aufweist sowie Mittel zum Transport des Oxidationsmittels innerhalb der Elektrode vom Einlass zum Auslass.

Die Mittel für den Transport der Reaktanden vom Einlass über die Elektrodenfläche hin zum Auslass werden im einfachsten Fall durch die Poren des Elektrodenmaterials selbst gebildet. Alternativ werden in die den Separatoren zugewandten Elektrodenoberflächen Kanäle eingelassen ähnlich den aus dem Stand der Technik bekannten Kanalstrukturen (flow fields) in den den Elektroden zugewandten Separatoroberflächen. Gemäß US 5,252,410 können auch diskontinuierliche Kanäle vorgesehen werden, d.h. vom Einlass aus erstreckt sich eine erste Gruppe von Kanälen und vom Auslass aus erstreckt sich eine zweite Gruppe von Kanälen, wobei die Kanäle der ersten Gruppe nicht direkt mit denen der zweiten Gruppe verbunden sind. An den Enden der Kanäle der ersten Gruppe wird das vom Einlass her die Kanäle durchströmende Fluid gezwungen, in die Porenstruktur der Elektrode überzutreten und gelangt so in die Nähe der Katalysatorschicht. Die Kanäle der zweiten Gruppe dienen dem Abtransport der Reaktionsprodukte und nicht umgesetzten Stoffe. Diese Anordnung der Strömungskanäle wird als "interdigitated" bezeichnet.

In einer bevorzugten Ausführungsform der US 5,252,410 besteht der Separator aus Graphitfolie, und die die Fluidverteilerstrulcturen aufnehmenden Elektroden bestehen aus Carbonfaserpapier.

Die Aufgabe der vorliegenden Erfindung besteht darin, Elektroden mit Kanalstrukturen für die Verteilung von Reaktanden bereit zu stellen, welche nicht wie herkömmliche KanalStrukturen nur eine flächige Verteilung des Reaktanden in der x-y Ebene bewirken, sondern den Reaktandenfluss innerhalb der Elektrode gleichzeitig auch in die z-Richtung, d.h. hin zur Katalysatorschicht lenken.

Diese Aufgabe wird dadurch gelöst, dass erfindungsgemäß die Elektrode aus mehreren aufeinander folgenden Schichten aus elektrisch leitfähigem porösen Material aufgebaut wird.
Die Kanalstruktur erstreckt sich vom Separator aus gesehen durch mindestens zwei aufeinander folgende Schichten der Elektrode und wird durch eine durchgehende, d.h. keine Kanäle enthaltende Schicht, welche an die Katalysatorschicht grenzt, abgeschlossen.
Die die Kanalstruktur umfassenden Schichten enthalten jeweils mehrere Aussparungen, welche Abschnitte von Strömungskanälen bilden, Innerhalb der einzelnen Schichten sind diese Kanäle nicht kontinuierlich. Beim Kombinieren der Schichten zur erfindungsgemäßen Elektrode jedoch ergänzen sich die Kanalabschnitte, die so angeordnet sind, dass es zwischen den Kanalabschnitten der aufeinander folgenden Schichten Überlappungen gibt, zu der gewünschten Kanalstruktur. Dadurch, dass die so gebildeten Strömungskanäle mehrere Übergänge zwischen den Schichten aufweisen, erfolgt neben dem Reaktandenfluss in der Ebene auch ein Reaktandenfluss in Dickenrichtung.
Die erfindungsgemäße Elektrode umfasst somit vom Separator aus gesehen mindestens zwei mit Aussparungen versehene poröse leitfähige Schichten, wobei die Aussparungen in einem solchen Muster angeordnet sind, dass sie sich zu der gewünschten Kanalstruktur ergänzen, sowie eine poröse leitfähige Schicht, welche keine Aussparungen enthält. Diese letzte Schicht der erfindungsgemäßen Elektrode steht in Kontakt mit der Katalysatorschicht, d.h. sie ist selbst mit einem Katalysator beschichtet und grenzt an die Elektrolytschicht, oder sie ist nicht katalysatorbeschichtet und grenzt an die ihrerseits katalysatorbeschichtete Elektrolytschicht.

Weitere Vorteile, Details und Varianten der Erfindung können der folgenden ausführlichen Beschreibung und den Figuren entnommen werden.

Die Figuren zeigen
- Figur 1: Querschnitt durch eine Brennstoffzelle mit erfindungsgemäßen Elektroden
- Figur 2: Schichtaufbau einer erfindungsgemäßen Elektrode mit einer ersten Variante der Kanalstruktur
- Figur 3: Schichtaufbau einer erfindungsgemäßen Elektrode mit einer zweiten Variante der Kanalstruktur
- Figur 4: Schichtaufbau einer erfindungsgemäßen Elektrode mit einer dritten Variante der Kanalstruktur

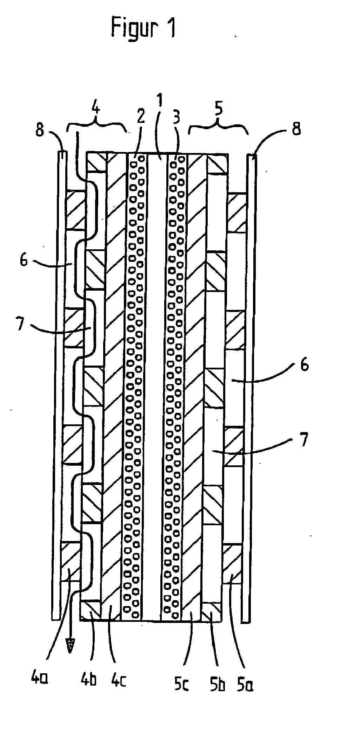

Der prinzipielle Aufbau von Brennstoffzellen mit den erfindungsgemäßen Elektroden geht aus Figur 1 hervor. Hier ist beispielhaft eine Polymerelektrolytmembran-Brennstoffzelle (PEMFC) dargestellt. Grundsätzlich lässt sich der erfindungsgemäße Aufbau der Elektroden auch auf andere Brennstoffzellentypen übertragen. Die Erfindung ist auch nicht an einen bestimmten Brennstoff oder ein bestimmtes Oxidationsmittel gebunden.
Kernstück der Brennstoffzelle ist die Elektrolytmembran 1 mit der anodenseitigen Katalysatorschicht 2 und der kathodenseitigen Katalysatorschicht 3. Alternativ können die Katalysatorschichten auch auf den der Elektrolytmembran 1 zugewandten Oberflächen der Elektroden 4, 5 angeordnet sein.
An die anodenseitige Katalysatorschicht 2 schließt sich die die Schichten 4a, 4b 4c umfassende Anode 4 an, und an die kathodenseitige Katalysatorschicht 3 die die Schichte 5a, 5b, 5c umfassende Kathode 5. Die jeweils unmittelbar an die Katalysatorschicht 2 bzw. 3 angrenzende Schicht 4c bzw. 5c der Elektrode 4 bzw. 5 weist keinerlei Aussparungen auf.
Die jeweils folgenden Schichten 4b und 4a bzw. 5b und 5a sind mit Aussparungen 7 und 6 versehen, welche einzelne Abschnitte von Strömungskanälen für die Verteilung der Reaktanden innerhalb der Elektroden 4, 5 darstellen. Die Aussparungen in den aufeinander folgenden Schichten sind so angeordnet, dass die Aussparungen 6 in der Schicht 4a bzw. 5a zusammenwirkend mit den Aussparungen 7 in der Schicht 4b bzw. 5b eine Kanalstruktur für den Transport der jeweiligen Reaktanden bereitstellen. Dadurch dass die Aussparungen 6 in der Schicht 4a, 5a teilweise mit den Aussparungen 7 in der Schicht 4b, 5b überlappen, werden die Kanalabschnitte in der Schicht 4a, 5a mit denen in der Schicht 4b, 5b verbunden. Der Verlauf der so gebildeten Strömungskanäle für die Reaktanden ist in Figur 1 beispielhaft für den Brennstoff in der Anode 4 durch einen Pfeil veranschaulicht. Der Reaktandenfluss wird beim Durchströmen der Kanäle mehrfach aus der äußersten Schicht 4a bzw. 5a in die innere Schicht 4b bzw. 5b umgelenkt und gelangt dadurch in eine größere Nähe zur Katalysatorschicht 2 bzw. 3.
Die aus den Aussparungen 6 und 7 zusammengesetzten Kanäle erstrecken sich also im Gegensatz zum Stand der Technik nicht nur in der Ebene der Elektrode, sondern ändern biem Übergang zwischen den Schichten ihre Richtung auch senkrecht zu dieser Ebene, d.h. in der Dickenausdehnung der Elektrode. Dadurch eröffnet die vorliegende Erfindung eine weitere Dimension für die Optimierung der Fluidverteilerstruktur, und es kann eine bessere Verteilung des Reaktanden innerhalb der Elektrode erreicht werden.
Zwar zeigt Figur 1 mehrlagige Elektroden, welche jeweils zwei mit Aussparungen versehene Schichten (4a, 4b bzw. 5a, 5b) und eine durchgehende Schicht (4c bzw. 5c) enthalten, jedoch ist die Erfindung nicht darauf beschränkt. Die Fluidverteilerstruktur kann selbstverständlich auch mehr als nur zwei Schichten mit einander ergänzenden Aussparungen umfassen. Die Kombination von mehr als zwei solchen Schichten erlaubt mehr Variationsmöglichkeiten bei der Ausdehnung der Fluidvetteilerstruktur in Dickenrichtung der Elektrode, ist jedoch mit einem höheren Arbeitsaufwand verbunden.

Die Brennstoffzelle gemäß Figur 1 wird abgeschlossen durch die Separatorschichten 8 und 8', welche einerseits die elektrische Verbindung zu den anschließenden Zellen herstellen und andererseits die Vermischung der Reaktanden zwischen den benachbarten Zellen unterbinden. Die Separatoren müssen in der erfindungsgemäßen Brennstoffzelle keine Fluidverteilerstrukturen aufnehmen und können daher relativ dünn sein, wobei das Minimum an Dicke durch das Erfordernis der Undurchlässigkeit für die Reaktanden bestimmt wird. Prinzipiell geeignet sind alle korrosionsbeständigen elektrisch leitfähigen Materialien, die bei geringer Dicke für die Reaktanden undurchlässig und mechanisch stabil sind.
Ein geeignetes Material für die Separatoren ist Graphitfolie, bevorzugt mit einer Dicke von 0,3 bis 1,5 mm und einer Dichte von 1,0 bis 1,8 g/cm³. Je größer die Dicke und die Dichte der Graphitfolie, desto geringer ist die Permeabilität für die Reaktanden. Eine große Dicke des Separators ist aus Platz- und Gewichtsgründen jedoch unerwünscht. Falls nötig, kann die Permeabilität der Graphitfolie durch Imprägnierung mit einem geeigneten Harz herabgesetzt werden. Separatoren aus Graphitfolie für Brennstoffzellen, sowoh1 ohne als auch mit Imprägnierung der Graphitfolie, sind in der Fachwelt bekannt.
Eine Alternative sind Separatoren aus Metallfolie, hierbei sind jedoch Korrosionsprobleme zu beachten.

Die Materialien für die die Elektroden 4 und 5 bildenden Schichten 4a, 4b, 4c und 5a, 5b, 5c müssen leitfähig und porös sein und sollten sich leicht mit Aussparungen versehen lassen.
Geeignete Materialien sind Papiere (Nassvliese), Vliese und Filze aus Carbon- oder Graphitfasern. Diese sind ggf. mit einer Imprägnierung versehen. Durch die Wahl der Imprägniermittel und den Grad der Imprägnierung lassen sich die Porosität und die Hydrophobie/Hydrophilie der Elektrodenschichten, einstellen.
Es ist auch bekannt, die Imprägnierung zu carbonisieren bzw. zu graphitieren. Beispiele für carbonisierbare Imprägniermittel sind Phenolharze, Epoxidharze und Furanharze. Beispiele für nicht carbonisierbare Imprägniermittel sind fluorhaltige Polymere wie PTFE. Zur Verbesserung der elektrischen Leitfähigkeit der Elektroden kann das Imprägniermittel dispergierte elektrisch leitfähige Partikel wie Ruß, Graphit o.ä. zu enthalten. Gegebenenfalls erhalten die Elektroden nach der Carbonisierung der Imprägnierung noch eine weitere Imprägnierung zur Einstellung der gewünschten Hydrophilie/Hydrophobie, beispielsweise mit einer Lösung von Nafion® zur Hydrophilierung oder mit einer Suspension von PTFE zur Hydrophobierung.
Geeignete Materialien für Elektroden sind beispielsweise aus den Patentanmeldungen WO 01 04980 und EP 1 369 528 bekannt.

Die einzelnen Elektrodenschichten 4a, 4b, 4c bzw. 5a, 5b 5c können aus verschiedenen Materialien bestehen.

Innerhalb der Elektroden können Schichten mit unterschiedlicher Porosität oder/und unterschiedlicher Hydrophobie/Hydrophilie beispielsweise kombiniert werden, so dass diese Parameter in Dickenrichtung der Elektrode einen Gradienten aufweisen.
Die Dicke der Schichten 4a, 5a, 4b, 5b, 4c, 5c beträgt zwischen 0,05 und 1 mm, bevorzugt sind Schichtdicken von 0,1 bis 0,5 mm, wobei innerhalb einer Elektrode die einzelnen Schichten verschieden dick sein können. Insbesondere die katalysatornahe Schicht 4c bzw. 5c sollte möglichst dünn sein, um den Diffusionsweg des Reaktanden von den Strömungskanälen bis zur Katalysatorschicht möglichst kurz zu halten.
Selbstverständlich können sich Anode 4 und Kathode 5 hinsichtlich der Anordnung und des Verlaufs der Strömungskanäle, der Porosität und Hydrophobie/Hydrophilie der Materialien, der Anzahl und Dicke der einzelnen Schichten sowie der Gesamtdicke der Elektrode unterscheiden. Der Fachmann wird diese Parameter entsprechend dem in der Elektrode zu transportierenden Fluid (z.B. Wasserstoff, Reformat, Methanol oder andere Alkohole, Erdgas oder andere Kohlenwasserstoffe als Brennstoff, Sauerstoff oder Luft als Oxidationsmittel) geeignet auswählen und optimieren.

Die Herstellung der Aussparungen erfolgt mittels Stanzen, Wasserstrahlschneiden o.ä. Techniken. Die die Elektroden bildenden Schichten werden entweder lose aufeinander gelegt und erhalten ihren Zusammenhalt beim Verspannen des Brennstoffzellenstapels, oder sie werden miteinander laminiert, so dass vorgefertigte mehrlagige Elektroden erhalten werden.

In einer Weiterentwicklung der Erfindung werden die die Anode 4 bildenden Schichten, die Separatorschicht 8, vorzugsweise aus Graphitfolie, und die die Kathode 5 bildenden Schichten miteinander laminiert oder anderweitig verbunden, so dass ein komplettes Bauteil umfassend Anode 4, Separator 8 und Kathode 5 erhalten wird, wobei ggf. die Anoden- und Kathodenoberfläche mit einer Katalysatorschicht 2 bzw. 3 versehen werden,
Alternativ können eine erfindungsgemäße Anode 4 und eine erfindungsgemäße Kathode 5 mit Katalysatorschichten 2, 3 und einer Elektrolytschicht, beispielsweise einer Elektrolytmembran 1, zu einem kompletten Bauteil kombiniert werden.

Ein besonderer Vorteil der Erfindung besteht darin, dass die zu kombinierenden Schichten keine langgestreckten Kanäle wie in herkömmlichen Kanalstrukturen aufweisen, sondern nur die relativ kurzen Aussparungen 6, 7. Dadurch wird die Handhabung der Elektrodenschichten, z.B. beim Zusammensetzen zu den erfindungsgemäßen Elektroden, erleichtert.

An den Kanten werden die porösen Elektroden mittels einer die Poren verschließenden Imprägnierung oder durch einen die Elektrode umschließenden Kunststoffrahrnem abgedichtet.

Die Versorgung der Elektroden mit Brennstoff bzw. Oxidationsmittel und der Abtransport der Reaktionsprodukte bzw. nicht umgesetzten Stoffe erfolgt in bekannter Weise mittels den Brennstoffzellenstapel durchquerender Verteil- und Sammelleitungen (manifolds). Diese werden entweder durch fluchtende Öffnungen in den Komponenten des Brennstoffzellenstapels gebildet (internal manifolding), oder sie sind seitlich am Brennstoffzellenstapel angesetzt (external manifolding). Die Kanalstrukturen der Anoden sind mit der Verteil- sowie mit der Sammelleitung für den Brennstoff verbunden, die Kanalstrukturen der Kathoden mit der Verteil- sowie mit der Sammelleitung für das Oxidationsmittel.

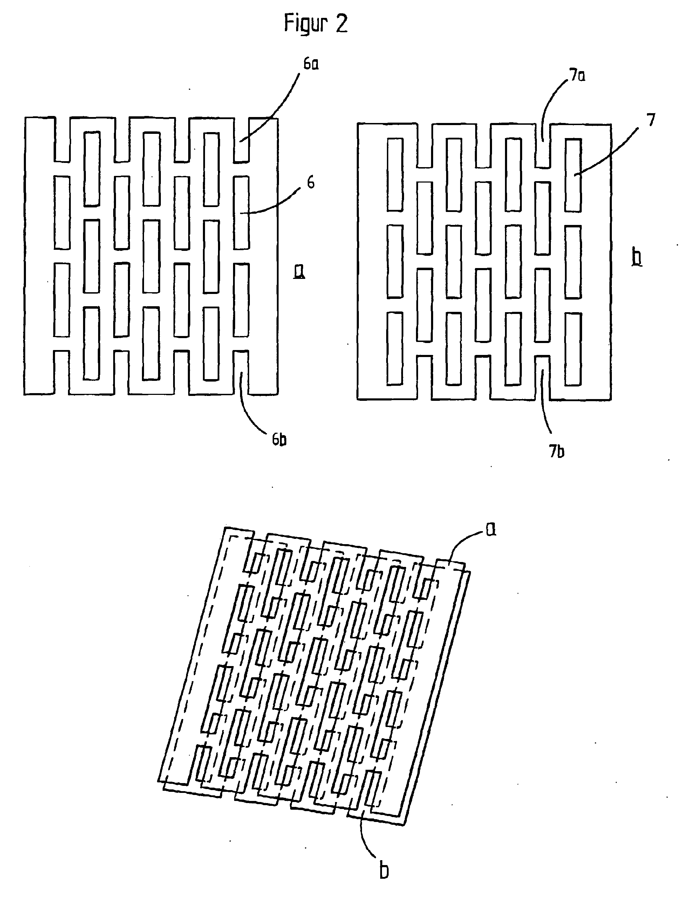

Die Figuren 2 bis 4 zeigen beispielhaft Varianten der Erfindung mit verschiedener Anordnungen der Aussparungen, die jeweils bestimmte Kanalstrukturen ergeben. Diese können sowohl für Anoden als auch für Kathoden verwendet werden. Die mit Aussparungen versehenen Schichten der erfindungsgemäßen Elektrode werden im folgenden allgemein als Schicht a und Schicht b bezeichnet, wobei Schicht a die in der Brennstoffzelle am Separator anliegende Schicht ist (siehe auch Figur 1).
Zur besseren Übersicht sind in den Figuren 2 bis 4 nur die Schichten a und b der erfindungsgemäßen Elektroden dargestellt, die unstrukturierten katalysatornahen Schichten (4c bzw. 5c in Figur 1) wurden weggelassen. Die an den Separator angrenzende Elektrodenschicht a und die folgende Schicht b werden einzeln in Draufsicht gezeigt. Außerdem ist die Anordnung der beiden die Fluidverteilstruktur umfassenden Schichten a und b in perspektivischer Ansicht dargestellt, so dass das Zusammenwirken der Aussparungen beider Schichten erkennbar ist, wobei Schicht a sich oben befindet.

Figur 2 zeigt eine Fluidverteilerstruktur, die mehrere parallele gerade Kanäle umfasst. Diese werden durch mehrere parallele Reihen von Aussparungen 6, 7 in den Schichten a und b gebildet. Innerhalb dieser Reihen sind die Aussparungen 6 in der Schicht a gegenüber den Aussparungen 7 in der Schicht b so versetzt, dass sie teilweise überlappen und auf diese Weise einander zu kontinuierlichen Kanälen, die in ihrem Verlauf mehrmals von der Schicht a in die Schicht b und von der Schicht b wieder in die Schicht a übergehen, ergänzen.

Der Antransport des Reaktanden zu den parallelen Kanälen erfolgt über einen nicht dargestellten Verteilkanal, der die Aussparungen 6a, 7a am Rand der Schicht a bzw. b, welche als Eingänge in die Parallelkanäle fungieren, mit dem manifold (Verteilleitung) für den Antransport des entsprechenden Reaktanden verbindet. Der Abtransport des Reaktanden erfolgt über einen nicht dargestellten Sammelkanal, der die Aussparungen 6b, 7b am gegenüberliegenden Rand der Schicht a bzw, b, welche als Ausgänge der Parallelkanäle fungieren, mit dem manifold (Sammelleitung) für den Abtransport des entsprechenden Reaktanden verbindet. Jeder Pararallelkanal besitzt einen Eingang 6a oder 7a, der in den (in Figur 2 nicht dargestellten) Verteilkanal mündet und einen Ausgang 6b oder 7b, der in den (in Figur 2 nicht dargestellten) Sammelkanal mündet, d.h. alle Parallelkanäle erstrecken sich kontinuierlich vom Verteil- zum Sammelkanal.
In der in Figur 2 dargestellten Variante wechseln sich Kanäle, deren Eingänge 6a und Ausgänge 6b in der Schicht a liegen, mit solchen ab, deren Eingänge 7a und Ausgänge 7b in der Schicht b liegen. Es sind natürlich auch andere Varianten denkbar, beispielsweise dass sich die Ein- und Ausgänge aller Kanäle in einer und derselben Schicht befinden, oder die Eingänge aller Kanäle in einer Schicht und die Ausgänge in der anderen, oder dass sich Kanäle mit dem Eingang in Schicht a und dem Ausgang in Schicht b mit solchen mit dem Eingang in Schicht b und dem Ausgang in Schicht a abwechseln.

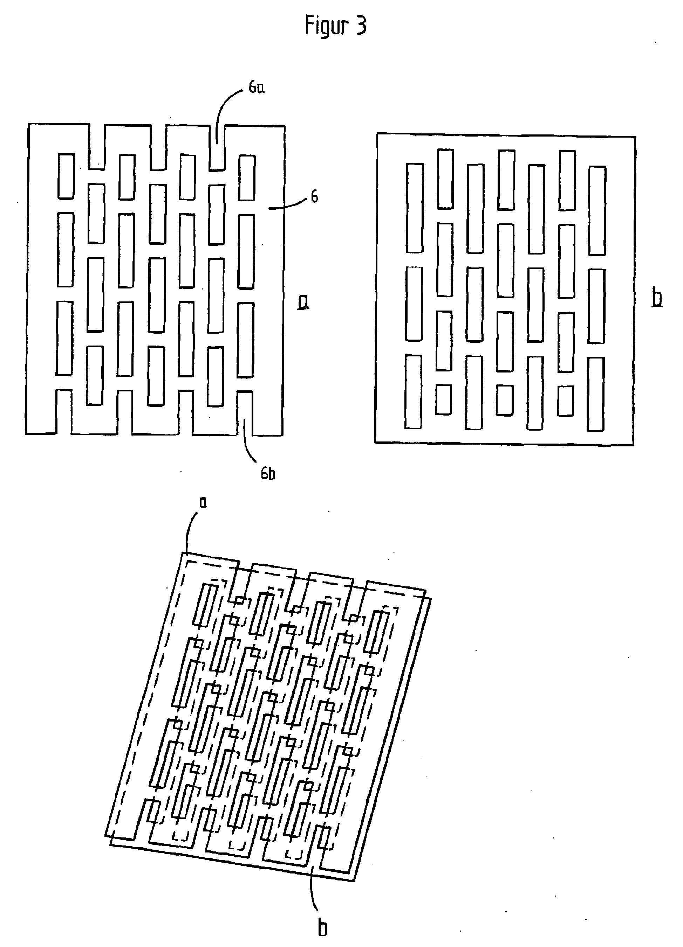

Die Kanalstruktur in Figur 3 umfasst ebenfalls mehrere gerade parallele Kanäle, welche durch mehrere parallele Reihen von einander teilweise überlappenden Aussparungen 6, 7 in den aufeinander folgenden Schichten a und b gebildet werden und in ihrem Verlauf mehrmals von der Schicht a in die Schicht b und von der Schicht b wieder in die Schicht a übergehen.
Im Unterschied zu der Kanalstruktur aus Figur 2 sind diese Kanäle diskontinuierlich. Eine Gruppe von Kanälen hat nur je einen Eingang 6a, aber keinen Ausgang, eine zweite Gruppe von Kanälen hat nur je einen Ausgang 6b, aber keinen Eingang. Die Kanäle sind vorzugsweise abwechselnd angeordnet, so dass jeweils auf einen Kanal der ersten Gruppe ein Kanal der zweiten Gruppe folgt und umgekehrt. Diese Art Kanalstruktur ist in der Fachwelt unter der Bezeichnung "interdigitated" bekannt.
Es sind natürlich auch andere Anordnungen diskontinuierlicher Kanäle möglich.
Die Verteilung des Reaktanden auf die parallelen Kanäle der ersten Gruppe erfolgt über einen nicht dargestellten Verteilkanal, der deren Eingänge 6a mit dem manifold (Verteilleitung) für den Antransport des entsprechenden Reaktanden verbindet. Der Abtransport des Reaktanden bzw. Reaktionsprodukte erfolgt über einen nicht dargestellten Sammelkanal, der die Ausgänge 6b der Kanäle der zweiten Gruppe mit dem manifold (Sammelleitung) für den Abtransport des entsprechenden Reaktanden verbindet.
Von den Eingängen 6a aus fließt der Reaktand durch die Kanäle der ersten Gruppe. An den verschlossenen Enden dieser Kanäle, die sich bevorzugt in der Schicht b befinden, wird der Übergang des Reaktanden in die poröse Elektrodenstruktur erzwungen, so dass der Reaktand in die Nähe der katalysatorbeschichteten Elektrode/Elektrolytgrenzfläche gelangt. Nicht umgesetzte Anteile des Reaktanden bzw. die Reaktionsprodukte werden durch die Kanäle der zweiten Gruppe über deren Ausgänge 6b abtransportiert.

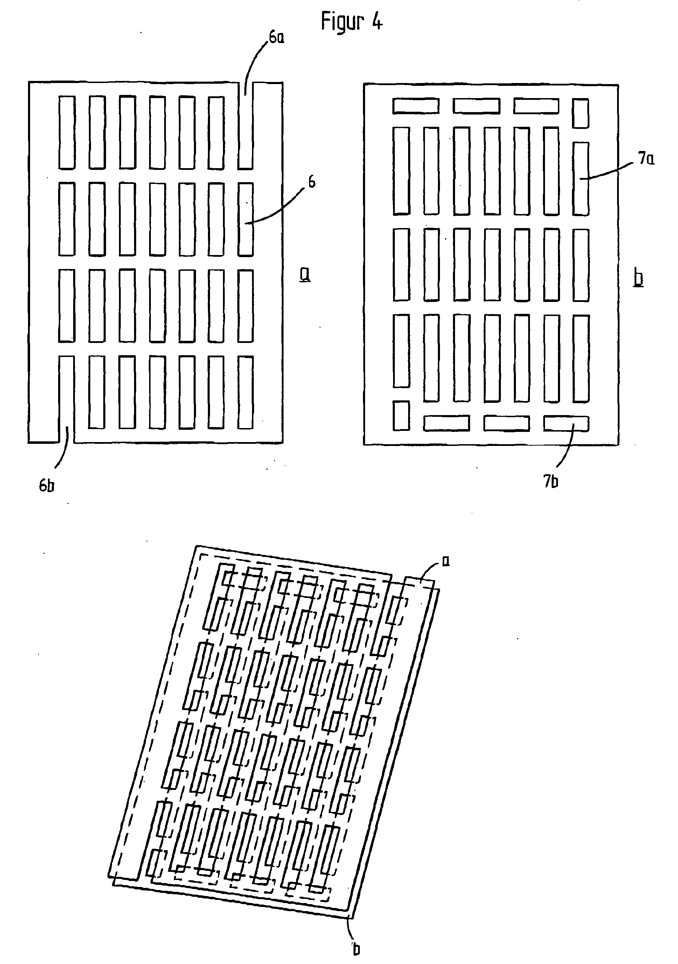

Figur 4 zeigt eine Kanalstruktur, welche nur einen einzigen Kanal enthält, der sich mäander-oder serpentinenartig über die Elektrodenfläche erstreckt und in seinem Verlauf mehrmals von der Schicht a in die Schicht b und zurück wechselt
Die an den Separator anschließende Schicht a weist dabei nur in Längsreihen angeordnete Aussparungen 6 auf, welche Abschnitte der Längsarme des Kanals bilden. Die Schicht b weist Aussparungen 7a auf, welche ebenfalls in Längsreihen angeordnet sind und sich mit den Aussparungen 6 in der Schicht a, mit denen sie teilweise überlappen, zu den Längsarmen des Serpentinenkanals ergänzen. An den Rändern der Schicht b befindet sich je eine quer zu den Längsreihen von Aussparungen 7a verlaufende Reihe von Aussparungen 7b, welche die Querverbindungen zwischen den Längsarmen des Serpentinenkanals herstellen.
Selbstverständlich sind Abwandlungen von dieser Struktur möglich, beispielsweise mit den Querverbindungen in der Schicht a oder mit einem Teil der Querverbindungen in der Schicht a und den anderen Querverbindungen in der Schicht b, beispielsweise so, dass die Querverbindungen der Längsarme abwechselnd in der Schicht a und der Schicht b liegen.
Die Aussparung 6a, welche als Eingang des Kanals fungiert, ist mit dem nicht dargestellten manifold (Verteilleitung) für den Antransport des entsprechenden Reaktanden verbunden. Die Aussparung 6b, welche als Ausgang des Kanals fungiert, ist mit dem nicht dargestellten manifold (Sammelleitung) für den Abtransport des entsprechenden Reaktanden verbunden.

Die in den Figuren 2 bis 4 dargestellten Kanalstrukturen sind nur beispielhaft zu verstehen, die vorliegende Erfindung umfasst darüber hinaus auch alle weiteren möglichen Strukturen, die sich durch die Kombination entsprechend angeordneter Aussparungen in aufeinander folgenden Schichten herstellen lassen.

## Patentansprüche

1. Elektrode (4; 5), umfassend
mindestens zwei mit Aussparungen (6, 7) versehene poröse leitfähige Schichten (4a, 4b; 5a, 5b), wobei die Aussparungen (6, 7) in einem solchen Muster angeordnet sind, dass sich die Aussparungen (6, 7) der aufeinander folgenden Schichten (4a, 4b; 5a, 5b) teilweise überlappen und so zu einer Kanalstruktur für die Verteilung von Fluiden ergänzen, wobei die von den zusammenwirkenden Aussparungen (6, 7) gebildeten Kanäle mehrfache Übergänge zwischen den mindestens zwei Schichten (4a, 4b, 5a, 5b) aufweisen;
sowie eine weitere poröse leitfähige Schicht (4c; 5c), welche keine Aussparungen enthält und in Kontakt mit einer Katalysatorschicht (2; 3)steht.

2. Elektrode nach Anspruch 1, **dadurch gekennzeichnet, dass** die keine Aussparungen aufweisende Schicht (4c; 5c) mit einem Katalysator (2; 3) beschichtet ist.

3. Elektrode nach Anspruch 1, **dadurch gekennzeichnet dass** die Dicke der die Elektrode (4; 5) bildenden Schichten (4a, 4b, 4c; 5a, 5b, 5e) zwischen 0,05 mm und 1 mm beträgt, bevorzugt zwischen 0,1 und 0,5 mm, wobei die einzelnen Schichten (4a, 4b, 4c; 5a, 5b, 5c) verschieden dick sein können.

4. Elektrode nach Anspruch 1, **dadurch gekennzeichnet, dass** das poröse leitfähige Material ein Papier (Nassvlies), Vlies oder Filz aus Carbon- oder Graphitfasern ist, wobei die einzelnen Schichten (4a, 4b, 4c; 5a, 5b, 5c) aus verschiedenen Materialien bestehen können.

5. Elektrode nach Anspruch 4, **dadurch gekennzeichnet, dass** das poröse leitfähige Material eine Imprägnierung aufweist.

6. Elektrode nach Anspruch 5, **dadurch gekennzeichnet, dass** in der Imprägnierung elektrisch leitfähige Partikel wie Ruß, Graphit o.ä. dispergiert sind.

7. Elektrode nach Anspruch 5, **dadurch gekennzeichnet, dass** die Imprägnierung carbonisiert oder graphitiert ist.

8. Elektrode nach Anspruch 4, **dadurch gekennzeichnet, dass** das poröse leitfähige Material eine Imprägnierung aufweist, welche die Hydrophilie/Hydrophobie des Materials beeinflusst.

9. Elektrode nach Anspruch 1 oder 8, wobei sich die Schichten (4a, 4b, 4c; 5a, 5b, 5c) hinsichtlich ihrer Porosität oder/und Hydrophilie/Hydrophobie unterscheiden, so dass in Dickenrichtung der Elektrode (4; 5) die Hydrophilie oder/und die Porosität einen Gradienten aufweist.

10. Elektrode nach Anspruch 1, **dadurch gekennzeichnet, dass** das poröse leitfähige Material an den Kanten der Elektrode (4; 5) mittels einer die Poren verschließenden Imprägnierung oder durch einen die Elektrode umschließenden Kunststoffrahmen abgedichtet

11. Elektrode nach Anspruch 1, **dadurch gekennzeichnet, dass** die durch das Zusammenwirken der Aussparungen (6, 7) in den aufeinanderfolgenden Schichten (4a, 4b; 5a, 5b) gebildete Kanalstruktur parallel zueinander verlaufende kontinuierliche Kanäle enthält

12. Elektrode nach Anspruch 1, **dadurch gekennzeichnet, dass** die durch das Zusammenwirken der Aussparungen (6, 7) in den aufeinanderfolgenden Schichten (4a, 4b; 5a, 5b) gebildete Kanalstruktur diskontinuierliche Kanäle enthält.

13. Elektrode nach Anspruch 1, **dadurch gekennzeichnet, dass** die durch das Zusammenwirken der Aussparungen (6, 7a, 7b) in den aufeinander folgenden Schichten (4a, 4b; 5a; 5b) gebildete Kanalstruktur einen in Serpentinen verlaufenden Kanal enthält.

14. Elektrode nach Anspruch 1, **dadurch gekennzeichnet, dass** die die Elektrode (4; 5) bildenden Schichten (4a, 4b, 4c ; 5a, 5b, 5c) miteinander laminiert sind.

15. Verbundbauteil für Brennstoffzellen, umfassend eine Anode (4) gemäß Anspruch 1, eine Separatorschicht (8) und eine Kathode (5) gemäß Anspruch 1.

16. Verbundbauteil für Brennstoffzellen gemäß Anspruch 15, **dadurch gekennzeichnet, dass** die Separatorschicht (8) Graphitfolie enthält.

17. Verbundbauteil für Brennstoffzellen, umfassend eine Anode (4) gemäß Anspruch 1, eine anodenseitige Katalysatorschicht (2), eine Elektrolytschicht (1), eine kathodenseitige Katalysatorschicht (3) und eine Kathode (5) gemäß Anspruch 1.

18. Verwendung von Elektroden nach Anspruch 1 bzw. Verbundbauteilen nach Anspruch 17 in Polymerelektrolytmembran-Brennstoffzellen mit Separatoren aus Graphitfolie.

## Claims

1. An electrode (4; 5), comprising
at least two porous conductive layers (4a, 4b; 5a, 5b) provided with recesses (6, 7), the recesses (6, 7) being arranged in a pattern such that the recesses (6, 7) of the consecutive layers (4a, 4b; 5a, 5b) partially overlap and in this way complement one another to form a channel structure for the distribution of fluids, the channels constituted by the interacting recesses (6, 7) exhibiting multiple transitions between the at least two layers (4a, 4b, 5a, 5b);
and also a further porous conductive layer (4c; 5c) which does not include any recesses and which is in contact with a catalyst layer (2; 3).

2. An electrode according to Claim 1, **characterised in that** the layer (4c; 5c) not exhibiting any recesses is coated with a catalyst layer (2; 3).

3. An electrode according to Claim 1, **characterised in that** the thickness of the layers (4a, 4b, 4c; 5a, 5b, 5c) constituting the electrode (4; 5) amounts to between 0.05 mm and 1 mm, preferably between 0.1 mm and 0.5 mm, it being possible for the individual layers (4a, 4b, 4c; 5a, 5b, 5c) to be of differing thickness.

4. An electrode according to Claim 1, **characterised in that** the porous conductive material is a paper (wet-laid non-woven), non-woven or felt made of carbon fibres or graphite fibres, it being possible for the individual layers (4a, 4b, 4c; 5a, 5b, 5c) to consist of different materials.

5. An electrode according to Claim 4, **characterised in that** the porous conductive material exhibits an impregnation.

6. An electrode according to Claim 5, **characterised in that** electrically conductive particles such as carbon black, graphite or such like are dispersed in the impregnation.

7. An electrode according to Claim 5, **characterised in that** the impregnation is carbonised or graphitised.

8. An electrode according to Claim 4, **characterised in that** the porous conductive material exhibits an impregnation which influences the hydrophilicity/hydrophobicity of the material.

9. An electrode according to Claim 1 or 8, wherein the layers (4a, 4b, 4c; 5a, 5b, 5c) differ with regard to their porosity or/and hydrophilicity/hydrophobicity, so that the hydrophilicity or/and the porosity exhibit(s) a gradient in the thickness direction of the electrode (4; 5).

10. An electrode according to Claim 1, **characterised in that** the porous conductive material is sealed at the edges of the electrode (4; 5) by means of an impregnation closing the pores or by a plastic frame surrounding the electrode.

11. An electrode according to Claim 1, **characterised in that** the channel structure formed by the interaction of the recesses (6, 7) in the consecutive layers (4a, 4b; 5a, 5b) includes continuous channels running parallel to one another.

12. An electrode according to Claim 1, **characterised in that** the channel structure formed by the interaction of the recesses (6, 7) in the consecutive layers (4a, 4b; 5a, 5b) includes discontinuous channels.

13. An electrode according to Claim 1, **characterised in that** the channel structure formed by the interaction of the recesses (6, 7a, 7b) in the consecutive layers (4a, 4b; 5a; 5b) includes a channel running in serpentines.

14. An electrode according to Claim 1, **characterised in that** the layers (4a, 4b, 4c ; 5a, 5b, 5c) constituting the electrode (4; 5) are laminated together.

15. A composite structural unit for fuel cells, comprising an anode (4) according to Claim 1, a separator layer (8) and a cathode (5) according to Claim 1.

16. Composite structural unit for fuel cells according to Claim 15, **characterised in that** the separator layer (8) includes graphite foil.

17. Composite structural unit for fuel cells, comprising an anode (4) according to Claim 1, an anode-side catalyst layer (2), an electrolyte layer (1), a cathode-side catalyst layer (3) and a cathode (5) according to Claim 1.

18. Use of electrodes according to Claim 1 or of composite structural units according to Claim 17 in polymer-electrolyte-membrane fuel cells with separators made of graphite foil.

## Revendications

1. Electrode (4 ; 5) comprenant :
au moins deux couches conductrices (4a, 4b ; 5a, 5b) poreuses, munies de découpes (6, 7),
les découpes (6, 7) étant réparties suivant un motif tel que les découpes (6, 7) de couches successives (4a, 4b ; 5a, 5b) se chevauchent partiellement et se complètent pour former une structure de canal pour la répartition de fluides,
les canaux formés par la coopération des découpes (6, 7) ayant des passages multiples entre au moins deux couches (4a, 4b ; 5a, 5b) ;
ainsi qu'une autre couche conductrice poreuse (4c ; 5c) qui ne comporte pas de découpes et est en contact avec une couche de catalyseur (2 ; 3).

2. Electrode selon la revendication 1,
**caractérisée en ce que**
la couche (4c ; 5c) qui ne comporte pas de découpes est revêtue d'un catalyseur (2, 3).

3. Electrode selon la revendication 1,
**caractérisée en ce que**
l'épaisseur des couches (4a, 4b, 4c ; 5a, 5b, 5c) qui forment l'électrode (4, 5) est comprise entre 0,05 mm et 1 mm et de préférence entre 0,01 et 0,5 mm et les différentes couches (4a, 4b, 4c ; 5a, 5b, 5c) peuvent avoir des épaisseurs différentes.

4. Electrode selon la revendication 1,
**caractérisée en ce que**
la matière conductrice poreuse est un papier (nappe humide), un non tissé ou un feutre formé de fibres de carbone ou de graphite et les différentes couches (4a, 4b, 4c ; 5a, 5b, 5c) peuvent être en des matériaux différents.

5. Electrode selon la revendication 4,
**caractérisée en ce que**
la matière conductrice poreuse comporte une imprégnation.

6. Electrode selon la revendication 5,
**caractérisée en ce que**
l'imprégnation contient une dispersion de particules électroconductrices telles que du noir de fumée, du graphite ou autres.

7. Electrode selon la revendication 5,
**caractérisée en ce que**
l'imprégnation est carbonisée ou graphitée.

8. Electrode selon la revendication 4,
**caractérisée en ce que**
la matière conductrice poreuse présente une imprégnation qui influence le caractère hydrophile/hydrophobe de la matière.

9. Electrode selon l'une quelconque des revendications 1 ou 8, dans laquelle les couches (4a, 4b, 4c ; 5a, 5b, 5c) diffèrent par leur porosité et/ou caractère hydrophile/hydrophobe de façon que dans le sens de l'épaisseur de l'électrode (4, 5), le caractère hydrophile et/ou la porosité présentent un gradient.

10. Electrode selon la revendication 1,
**caractérisée en ce que**
la matière conductrice poreuse est rendue étanche aux arêtes de l'électrode (4 ; 5) par une imprégnation qui ferme les pores ou par un châssis en matière plastique entourant l'électrode.

11. Electrode selon la revendication 1,
**caractérisée en ce que**
la structure de canal formée par la coopération des découpes (6, 7) dans les couches successives (4a, 4b ; 5a, 5b), comporte des canaux parallèles et continus.

12. Electrode selon la revendication 1,
**caractérisée en ce que**
la structure de canaux formée par la coopération des découpes (6, 7) dans les couches successives (4a, 4b ; 5a, 5b), comporte des canaux discontinus.

13. Electrode selon la revendication 1,
**caractérisée en ce que**
la structure de canaux formée par la coopération des découpes (6, 7a, 7b) des couches successives (4a, 4b ; 5a, 5b), comporte un canal en serpentin,

14. Electrode selon la revendication 1,
**caractérisée en ce que**
les couches (4a, 4b, 4c ; 5a, 5b, 5c) qui forment l'électrode (4 ; 5) sont laminées les unes aux autres.

15. Pièce composite pour des piles à combustible comprenant une anode (4) selon la revendication 1, une couche de séparation (8) et une cathode (5) selon la revendication 1.

16. Pièce composite pour piles à combustible selon la revendication 15,
**caractérisée en ce que**
la couche de séparation (8) comporte un film de graphite.

17. Pièce composite pour des piles à combustible comprenant une anode (4) selon la revendication 1, une couche de catalyseur (2) côté anode, une couche d'électrolyte (1), une couche de catalyseur (3) côté cathode et une cathode (5) selon la revendication 1.

18. Utilisation d'électrodes selon la revendication 1 ou de pièces composites selon la revendication 17 pour des piles à combustible à membrane d'électrolyte polymère avec des séparateurs formés par un film de graphite.
